# DEMANDE DE BREVET EUROPEEN

(11) **EP 2 634 726 A1**
(43) Date de publication de la demande: **04.09.2013**
(21) Numéro de dépôt: 13155967.6
(22) Date de dépôt: 20.02.2013
(51) Int. Cl.: G06K 7/10, H04M 1/725

(54) **Mémoire non volatile pour routeur NFC**

(30) Priorité: 29.02.2012 FR 1251855
(71) Demandeur: ST Microelectronics (Rousset) SAS, 13790 Rousset (FR)
(72) Inventeur: Charles, Alexandre, 13390 AURIOL (FR)
(74) Mandataire: Thibon, Laurent

(57) **Abrégé**

L'invention concerne un circuit comprenant dans un même boîtier : un circuit intégré (2) incluant au moins une interface de communication en champ proche (22) de type NFC, et une interface de communication d'un autre type (24, 26) ; et un circuit intégré comprenant un module de sécurité (3) incluant une mémoire non volatile (35), la mémoire non volatile étant exploitée par l'interface NFC pour stocker des données de configuration.

## Description

### Domaine de l'invention

La présente invention concerne de façon générale les circuits électroniques et, plus particulièrement, les circuits et architectures électroniques intégrant une interface de communication en champ proche (routeur NFC - Near Field Communication).

### Exposé de l'art antérieur

De plus en plus de dispositifs mobiles de télécommunication sont équipés d'interfaces de communication en champ proche, généralement dénommées routeurs NFC. Un routeur NFC confère au dispositif des fonctionnalités supplémentaires. Un routeur NFC peut fonctionner soit en mode carte, le dispositif ayant alors les fonctions d'une carte de communication sans contact, soit en mode lecteur, le dispositif ayant alors les fonctions d'un terminal de lecture et/ou d'écriture de carte sans contact.

En mode carte, le dispositif est susceptible de fonctionner en étant alimenté par le champ rayonné par un terminal avec lequel il communique et sans recourir à l'énergie de la batterie du dispositif. Dans un tel mode, l'interface de communication sans contact n'a toutefois pas accès à tous les circuits équipant le dispositif dans lequel il est inclus car cela engendrerait une consommation trop importante.

Un tel problème ne se pose pas en mode lecteur où le dispositif utilise sa batterie pour émettre un champ haute fréquence susceptible d'être capté par un autre dispositif fonctionnant en mode carte. Dans une telle configuration, le routeur NFC dispose de tous les circuits du dispositif mobile.

Le routeur NFC a bien entendu besoin de circuits mémoire, parmi lesquels des éléments de mémoire non volatile reprogrammable permettant de conserver, entre autres, ses données de configuration. Dans la mesure où le routeur NFC n'a généralement pas accès aux mémoires du dispositif lorsqu'il est en mode carte car cela engendrerait une consommation trop importante, la plupart des routeurs NFC intègrent leurs propres éléments de mémoire non volatile.

On commence à voir apparaître des interfaces de communication sans contact qui sont intégrées avec d'autres circuits de communication. De tels circuits multifonction ou multi-connectivité sont généralement dénommés "combo". L'objectif est d'intégrer, dans une même puce, les fonctions de communication sans contact (NFC) et d'autres fonctions de communication telles que, par exemple, Bluetooth, Wifi, etc. Or, ces circuits multifonction font généralement appel à des technologies analogiques qui ne prévoient pas l'intégration de mémoires non volatiles. Classiquement, un circuit multifonction de ce type utilise une mémoire non volatile externe générique et faisant partie du dispositif.

### Résumé

Un objet d'un mode de réalisation de la présente invention invention est de pallier tout ou partie des inconvénients des circuits intégrant une interface de communication en champ proche et d'autres circuits de communication dans une même puce.

Un autre objet d'un mode de réalisation de la présente invention est d'éviter le besoin d'une mémoire non volatile externe à un circuit de communication multifonction.

Pour atteindre tout ou partie de ces objets ainsi que d'autres, on prévoit un circuit comprenant dans un même boîtier :
un circuit intégré incluant au moins une interface de communication en champ proche de type NFC, et une interface de communication d'un autre type ; et
un circuit intégré comprenant un module de sécurité incluant une mémoire non volatile,
la mémoire non volatile étant exploitée par l'interface NFC pour stocker des données de configuration.

Selon un mode de réalisation de la présente invention, les communications entre l'interface NFC et la mémoire non volatile exploitent un bus de type SWP.

On prévoit également un procédé de partage d'une mémoire non volatile d'un module de sécurité connecté par un bus de type SWP à une interface de communication en champ proche de type NFC, dans lequel la mémoire non volatile est utilisée pour stocker des informations de configuration de l'interface de communication en champ proche.

Selon un mode de réalisation de la présente invention, après l'activation du bus SWP qui suit l'initialisation de l'interface NFC, ladite interface NFC entame un échange avec la mémoire non volatile en utilisant la couche transport d'un protocole de communication CLT tel que défini dans la norme ETSI TS102613.

Selon un mode de réalisation de la présente invention, une commande d'administration d'une trame normalisée selon la norme ETSI TS102613 est utilisée pour démarrer une session de communication avec la mémoire non volatile.

On prévoit également un dispositif mobile de télécommunication intégrant un circuit tel que ci-dessus.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1 est un schéma bloc simplifié d'un mode de réalisation d'un circuit intégrant plusieurs fonctions de communication parmi lesquelles une interface de communication en champ proche, dans son environnement dans un dispositif de télécommunication ;
la figure 2 est un organigramme simplifié d'un mode de partage d'une mémoire non volatile équipant un circuit sécurisé dans le dispositif de la figure 1 ; et
les figures 3A et 3B illustrent un mode de mise en oeuvre exploitant un protocole de type SWP.

### Description détaillée

De mêmes éléments ont été désignés par de mêmes références aux différentes figures. Par souci de clarté, seuls les étapes et éléments utiles à la compréhension des modes de réalisation décrits ont été détaillés. En particulier, les protocoles d'établissement des communications entre le dispositif mobile de télécommunication et des éléments distants n'ont pas été détaillés, les modes de réalisation décrits étant compatibles avec les protocoles usuels. De plus, les protocoles de communication entre un circuit d'interface de communication en champ proche et les autres éléments du dispositif dans lequel il est monté n'ont pas été non plus détaillés, les modes de réalisation décrits étant là encore compatibles avec les systèmes usuels.

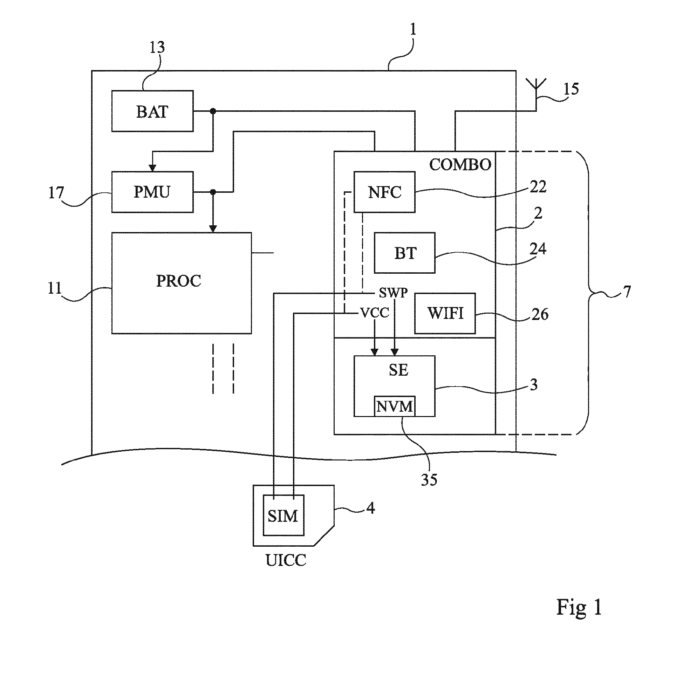

La figure 1 est une représentation schématique, sous forme de blocs et partielle, d'un mode de réalisation d'un dispositif 1 de télécommunication. Seule une partie du dispositif a été représentée. En particulier, la plupart de ses interfaces d'entrée/sortie avec un clavier, un écran ou autres interfaces utilisateur n'ont pas été représentées, ces éléments n'étant pas modifiés par la mise en oeuvre des modes de réalisation décrits.

Le dispositif 1 comporte généralement un processeur principal 11 (PROC) de commande et de traitement qui est susceptible de communiquer, par l'intermédiaire de divers bus (non représentés), avec les différents circuits du dispositif. Le dispositif 1 comporte également un circuit 2 (COMBO) apte à mettre en oeuvre plusieurs fonctions de communication. Il s'agit d'un circuit intégrant au moins une interface 22 de communication en champ proche (routeur NFC). Dans l'exemple représenté, le circuit combo 2 intègre également une interface 24 de type Bluetooth (BT) et une interface 26 (WIFI) de type Wifi.

Comme indiqué précédemment, la présence d'un routeur NFC fait que le dispositif 1 est susceptible de fonctionner soit en utilisant l'énergie d'une batterie 13 (BAT), soit en utilisant l'énergie captée d'une antenne 15 susceptible de capter un champ rayonné par un terminal (non représenté) à portée duquel se trouve le dispositif 1. De façon usuelle, le dispositif 1 comporte en outre un circuit 17 de gestion d'énergie (PMU - Power Management Unit).

Le circuit COMBO 2 est basé sur une technologie analogique en raison des fonctions qu'il intègre. Il se trouve en relation avec un ou plusieurs modules de sécurité dont le rôle est de contrôler les communications. Parmi ces éléments, on trouve habituellement un élément sécurisé 3 (SE - Secure Element) sous la forme d'un circuit intégré monté à demeure dans le dispositif et un module d'identification d'abonné 4 (SIM - Subscriber Identification Module) ou carte à puce d'identification universelle (UICC - Universal Identification Chip Card).

L'élément sécurisé 3 sert principalement à la gestion des communications des circuits 22, 24 et 26. On cherche alors à le placer le plus près possible du circuit 2 afin, notamment, de limiter la consommation lorsque le routeur NFC fonctionne sans batterie. En pratique, le circuit intégré formant l'élément sécurisé 3 est monté dans le même boîtier 7 de circuits que le circuit intégré 2.

Les inventeurs prévoient de tirer profit du fait que le circuit 2 est associé, dans un même boîtier 7, à une mémoire non volatile reprogrammable 35 intégrée à l'élément sécurisé 3. Cette mémoire 35 est généralement d'une capacité nettement supérieure aux besoins propres du fonctionnement de l'élément 3. En pratique, la mémoire 35 a une capacité de l'ordre du méga-octet alors que le fonctionnement des applications de l'élément sécurisé (par exemple, dérivation de clé, algorithme cryptographiques, etc.) ne nécessite que quelques dizaines de kilo-octets. On prévoit donc de tirer profit de cette capacité disponible.

Les différents circuits intègrent également des mémoires non volatiles non reprogrammables (mémoire mortes, ROM) et des mémoires vives (RAM) mais on ne se préoccupe ici que des besoins en mémoires non volatiles reprogrammables qui sont particuliers et qui ne peuvent pas être satisfaits avec les autres types de mémoire. Dans la description qui suit et sauf précision contraire, mémoire non volatile signifie mémoire non volatile reprogrammable.

On aurait pu penser exploiter la mémoire non volatile contenue dans la carte SIM 4. Toutefois, cet élément est un élément externe au dispositif 1, est interchangeable et se doit de répondre à un standard (principalement ETSI). Par conséquent, cet élément est trop versatile pour que sa mémoire non volatile soit utilisée pour la configuration du routeur NFC.

La communication entre le routeur NFC et plus généralement le circuit 2 et l'élément 3 s'effectue habituellement grâce à un bus de type SWP (Single Wire Protocol). Ce bus sert notamment aux échanges entre les circuits communicants 22, 24 et 26 et la carte SIM 4 ou le module de sécurité 3 pour le contrôle des communications gérées par les circuits communicants 22, 24 et 26. Par ailleurs, l'alimentation de la carte SIM 4 ainsi que de l'élément sécurisé 3 provient du routeur NFC afin de pouvoir faire fonctionner ces éléments en mode carte (batterie OFF).

D'autres signaux habituellement échangés entre les modules de sécurité 3 et 4 et les différents circuits (signal d'horloge, entrée-sortie autre que sur bus SWP pour d'autres modes d'échange, etc.) n'ont pas été illustrés et ne sont pas modifiés.

On tire profit de la présence du bus SWP reliant le routeur NFC à l'élément 3 pour accéder à la mémoire non volatile 35 de cet élément indépendamment des fonctions de sécurité.

Les échanges entre le routeur NFC et l'élément sécurisé 3, donc sa mémoire volatile 35, peuvent utiliser divers niveaux de communication.

Dans un premier mode de réalisation, on prévoit de gérer ces échanges au niveau applicatif. Cela requiert de prévoir deux programmes applicatifs spécifiques, l'un côté routeur NFC et l'autre côté élément sécurisé, ce qui n'est pas toujours souhaitable.

Une autre solution est de gérer ces échanges au niveau des systèmes d'exploitation.

Les deux processus ci-dessus requièrent que le routeur ait été alimenté et initialisé. Par conséquent, cela nécessite que le routeur NFC ait une première phase d'initialisation basée uniquement sur l'utilisation de sa mémoire non volatile non reprogrammable (mémoire morte ROM) et n'ayant pas besoin de recourir à la mémoire 35.

Deux autres niveaux dans lesquels on peut gérer les échanges entre le routeur NFC et l'élément sécurisé sont le niveau physique et la couche de transport.

Le niveau physique est le niveau le plus rapide du système et serait donc parfaitement compatible avec un fonctionnement dans un mode batterie OFF. En effet, il est souhaitable que les échanges entre la mémoire non volatile et le routeur NFC à des fins de configuration soient initiés dès que le routeur est téléalimenté par un lecteur avant même l'échange d'une communication RF avec ce lecteur. En pratique, on a besoin d'échanger quelques kilo-octets d'information entre le routeur NFC et la mémoire non volatile avant de commencer une communication. Or, on souhaite que cette communication débute quelques millisecondes, (par exemple de l'ordre de 5 millisecondes) après que l'on ait commencé à capter un champ.

Toutefois, la gestion de ces échanges au niveau de la couche physique consomme plus que dans les autres niveaux. En particulier, cela nécessite une interface de communication dédiée (hors bus SWP qui n'est pas encore activé) entre le routeur NFC et la mémoire non volatile indépendamment de toute communication entre l'élément sécurisé et ce routeur NFC. Cela requiert de devoir supporter les deux interfaces de communication (interface dédiée et bus SWP) en mode batterie OFF et engendre les besoins de consommation correspondants.

Ainsi, selon un mode de réalisation préféré, on utilise la couche transport pour gérer les échanges entre le routeur NFC et l'élément sécurisé. La couche transport est usuellement utilisée pour gérer les applications NFC et est définie dans une norme ETSI TS102613 qui définit le lien physique et les protocoles de communication sur le bus SWP.

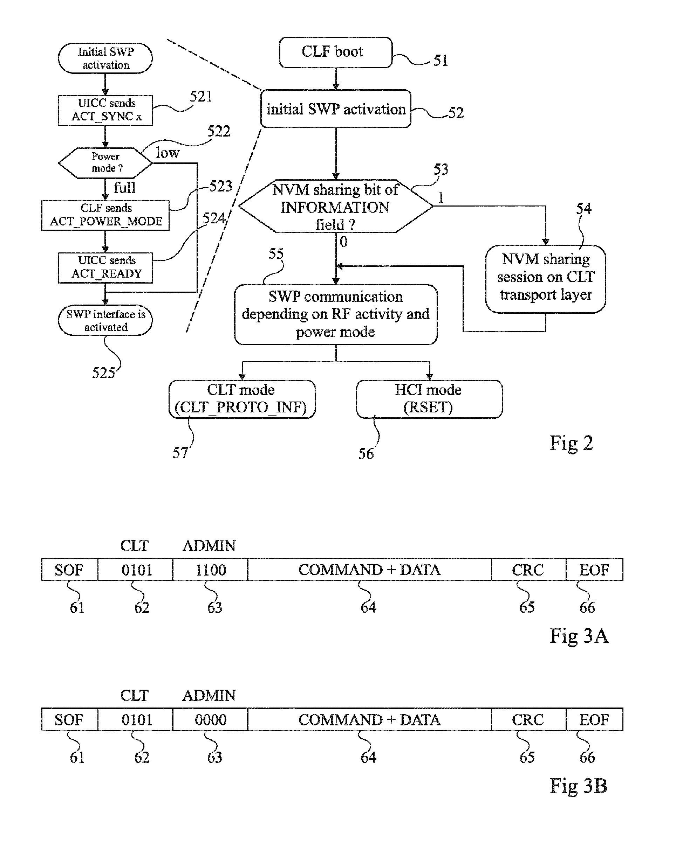

La figure 2 est un organigramme simplifié illustrant un exemple de séquence d'activation du bus SWP permettant l'échange avec la mémoire non volatile de l'élément sécurisé.

Lorsque le dispositif 1 se retrouve à portée d'un terminal générant un champ haute fréquence pour une communication en champ proche, le routeur NFC 22 détecte la présence de ce champ et commence à être téléalimenté en extrayant de l'énergie du champ rayonné par le terminal.

Une première étape 51 (CLF boot) correspond à une initialisation de la fonction sans contact.

Cette étape est suivie par une activation initiale du bus SWP (bloc 52, Initial SWP activation).

Cette activation comporte de façon usuelle les étapes successives suivantes :
la carte SIM 4 ou la carte UICC connectée au bus SWP et recevant une commande du routeur NFC envoie une commande d'activation du bus SWP (bloc 521, UICC sends ACT_SYNCx) ;
le routeur CLF détecte le mode d'alimentation du système (bloc 522, Power mode?) ;
si le mode de gestion de la puissance est pleine puissance, c'est-à-dire que le circuit 2 est alimenté par la batterie 13 interne au dispositif 1 (sortie full du bloc 522), le routeur envoie sur le bus SWP une commande d'activation du mode d'alimentation (bloc 523, CLF sends ACT_POWER_MODE), la carte UICC accuse réception en envoyant une commande confirmant l'activation (bloc 524, UICC sends ACT_READY) et l'interface SWP est alors active (bloc 525, SWP interface is activated) ; et
si le mode est le mode faible puissance (mode par défaut) et que l'énergie ne provient que du champ capté par l'antenne (sortie low du bloc 522), les commandes 524 et 523 sont omises et l'interface SWP est activée en mode basse puissance.

A la suite de l'activation du bus SWP, le routeur CLF teste le besoin d'un échange avec la mémoire 35 avant d'établir une communication. Cela revient à vérifier si le routeur NFC est ou non déjà initialisé. Par exemple, on prévoit de vérifier l'état d'un bit indicateur du besoin d'une communication avec la mémoire non volatile de l'élément sécurisé (bloc 53, NVM sharing bit of INFORMATION field?).

Si un besoin de configuration est établi (sortie 1 du bloc 53), l'interface NFC débute une session avec la mémoire non volatile 35 de l'élément sécurisé en utilisant la couche transport (CLT - ContactLess Tunneling) de la liaison SWP (bloc 54, NVM sharing session on CLT transport layer).

Sinon (sortie 0 bloc 53), cela signifie que le routeur NFC est correctement configuré et n'a pas besoin d'accès à la mémoire non volatile.

A l'issue de l'étape 54 ou en l'absence de besoin d'échange avec la mémoire 35, on démarre une communication sur le bus SWP en fonction de l'activité radiofréquence c'est-à-dire des trames reçues du terminal (bloc 55, SWP communication depending on RF activity and power mode).

Cette communication s'effectue, selon les applications, soit dans un mode dit HCI (bloc 56, HCI mode (RSET)) qui est un mode de communication relativement lent s'appuyant sur la couche transport du protocole CLT et qui est généralement utilisé dans les modes bancaires, soit en mode CLT (bloc 57, CLT mode, (CLT_PROTO_INF)) qui est un mode de communication plus rapide.
Les figures 3A et 3B illustrent un exemple de trames de communication tirant profit de l'existence d'une commande d'administration non utilisée et disponible d'après le format défini par la norme ETSI susmentionnée.
La figure 3A illustre la trame initiale lorsque l'on souhaite communiquer avec la mémoire non volatile de l'élément sécurisé. La figure 3B illustre les trames ultérieures d'une communication vers cette mémoire non volatile.

La trame débute par un champ 61 contenant un code SOF (Start Of Frame) indicateur d'un début de trame, suivi d'un code de définition du mode CLT. Ce champ contient la valeur 0101 selon la norme ETSI.

Par la suite, les trames des figures 3A et 3B diffèrent selon que l'on initie la transmission vers la mémoire non volatile ou que celle-ci est déjà établie.

Dans le premier cas, on utilise un champ 63 (ADMIN) d'administration en tirant profit de l'existence de valeurs libres. Par exemple, on choisit la valeur 1100 comme indiquant le besoin d'un échange avec la mémoire non volatile. Le reste de la trame (29 octets dans l'exemple donné ci-dessus), est utilisé pour la transmission des commandes et des données (champ 64, COMMAND + DATA), puis d'un code correcteur d'erreur (champ 65, CRC) et d'un champ 66 indiquant la fin de la trame (EOF - End Of Frame).

Si l'échange avec la mémoire non volatile tient dans les 29 octets du champ 64, une seule trame est utilisée.

Si cette capacité n'est pas suffisante, on utilise alors une ou plusieurs trames suivantes telles qu'illustrées en figure 3B. Ces trames diffèrent de celle de la figure 3A par le fait que le champ 63 est laissé à une valeur 0000 indiquant qu'il n'y a pas de commande d'administration dans la trame. Ainsi, on reste dans l'état fixé par la valeur 1100 (trame de la figure 3A). La sortie d'une session d'échange avec la mémoire non volatile s'effectue à l'aide d'une commande particulière dans le champ 64 indiquant une fin de session.

Pour être en mesure d'échanger correctement des informations avec la mémoire non volatile, on prévoit de définir des commandes particulières mises en oeuvre par la couche logicielle une fois que la commande d'administration 1100 a été activée. Ces commandes sont typiquement des commandes de lecture (Read), d'écriture (Write), de lecture de la réponse (Read_answer), de lecture de l'état des données échangées (Read_status), d'écriture de l'état des données échangées (Write_status) et de fin de session (End_session). Les commandes de lecture, d'écriture et de fin de session sont envoyées par le routeur NFC, les commandes de lecture de la réponse et de lecture et d'écriture de l'état des données échangées sont envoyées par l'élément sécurisé.

Les commandes ci-dessus peuvent, par exemple, être mise en oeuvre avec quatre octets de définition de l'adresse de la zone à lire dans l'élément sécurisé (ce nombre dépend de la capacité de la mémoire 35), suivis par la taille du paquet de données.

Divers modes de réalisation ont été décrits, diverses variantes et modifications apparaîtront à l'homme de l'art. De plus, la mise en oeuvre pratique des modes de réalisation exposés est à la portée de l'homme du métier à partir des indications fonctionnelles données ci-dessus. En particulier, la programmation d'une interface NFC et d'un élément sécurisé afin qu'ils soient en mesure d'exploiter les modes de réalisation décrits est à la portée de l'homme du métier à partir de ces indications fonctionnelles et en utilisant des outils en eux-mêmes usuels. En particulier, on se référera à la norme ETSI susmentionnée pour la définition des tailles des différents champs et les commandes disponibles.

## Revendications

1. Circuit comprenant dans un même boîtier :
un circuit intégré (2) incluant au moins une interface de communication en champ proche (22) de type NFC, et une interface de communication d'un autre type (24, 26) ; et
un circuit intégré comprenant un module de sécurité (3) incluant une mémoire non volatile (35),
la mémoire non volatile étant exploitée par l'interface NFC pour stocker des données de configuration.

2. Circuit selon la revendication 1, dans lequel les communications entre l'interface NFC (22) et la mémoire non volatile (35) exploitent un bus de type SWP.

3. Procédé de partage d'une mémoire non volatile (35) d'un module de sécurité (3) connecté par un bus de type SWP à une interface de communication en champ proche (22) de type NFC, dans lequel la mémoire non volatile est utilisée pour stocker des informations de configuration de l'interface de communication en champ proche.

4. Procédé selon la revendication 3, dans lequel après l'activation du bus SWP (52) qui suit l'initialisation de l'interface NFC (22), ladite interface NFC entame un échange avec la mémoire non volatile (35) en utilisant la couche transport d'un protocole de communication CLT tel que défini dans la norme ETSI TS102613.

5. Procédé selon la revendication 4, dans lequel une commande d'administration d'une trame normalisée selon la norme ETSI TS102613 est utilisée pour démarrer une session de communication avec la mémoire non volatile.

6. Dispositif mobile de télécommunication intégrant un circuit conforme à l'une quelconque des revendications 1 et 2.
